# EUROPEAN PATENT APPLICATION

(11) **EP 3 663 095 A1**
(43) Date of publication of application: **10.06.2020**
(21) Application number: 18211027.0
(22) Date of filing: 07.12.2018
(51) Int. Cl.: B41M 5/00, B41M 1/30, B41M 7/00, C09D 11/00

(54) **INKJET PRINTING ON POLYCARBONATE SUBSTRATES**

(71) Applicant: Nanogate SE, 66287 Goettelborn (DE)
(72) Inventor: van Peer, Cornelis Johannes Gerardus Maria, 4661 ZD Halsteren (NL); Vossen, Mathias Antoinette Johannes, 5951 NG Belfeld (NL)
(74) Representative: Nederlandsch Octrooibureau

(57) **Abstract**

The invention relates to a method for inkjet printing radiation-curable ink, such as radiation curable solvent-based inks, UV-curable inks or EB-curable inks, onto a polycarbonate substrate that is treated with a treating fluid being a homogeneous liquid at a temperature between 15 and 35°C, comprising at least 10 wt% of one or more cyclic ketones being liquid at a temperature between 15 and 35°C, based on the weight of the homogeneous liquid phase, wherein the remainder of the treating fluid consists of diacetone alcohol.

## Description

### TECHNICAL FIELD OF THE INVENTION

The invention relates to a method for printing radiation-curable ink, such as radiation curable solvent-based inks, UV-curable inks or EB-curable inks, onto a polycarbonate substrate. The invention further relates to inkjet printed polycarbonate substrates obtainable by said method.

### BACKGROUND OF THE INVENTION

Plastic materials are being used in a number of automotive engineering applications to enhance vehicle styling. Due to its superior mechanical and thermal properties, polycarbonate is one of the preferred materials in the manufacturing of numerous parts and components in the automotive industry. Nowadays, there is an increasing demand for decorated, such as personalized, polycarbonate parts and components, and also for polycarbonate parts and components provided with electronic components.

However, non-porous low surface energy plastic substrates such as polycarbonate substrates present certain problems with respect to quality and robustness of images printed thereon. Inkjet printed images on the plastic substrate can for example be easily rubbed off or scratched off during normal handling with only moderate force. Generally speaking, this low robustness is caused by a limited adhesion of the ink to the plastic substrate.

Non-porous plastic substrates offer only a limited number of sites at the molecular level, or hardly any sites at all, for firm and lasting grip and tight bonding of the molecules in the ink to the substrate. Therefore, current printing technologies such as inkjet printing of radiation-curable ink do not provide for high-quality wear-resistant results in many if not all occasions when plastic substrates such as untreated or virgin polycarbonate substrates are printed on.

In order to mitigate this problem, it has been proposed to subject plastic substrates to surface treatments such for example flame oxidation, corona treatment, UV H-bulb treatment or plasma treatment before printing. Moreover, coatings and primers have been developed for priming the surfaces of non-porous plastic substrates before ink is printed thereon.

For example, US patent application US2014/0227494A1 discloses printing an adhesive primer onto non-porous plastic substrates, among which are polypropylene, polyethylene terephthalate and polycarbonate, using inkjet technology to form a primer layer, and subsequently printing a UV-curable ink onto the primer layer using inkjet technology. Likewise, US2003/0224128A1 discloses primed substrates, among which are polycarbonate films, that are inkjet printed on with a non-aqueous solvent based ink. Furthermore, international patent application WO02/85638A1 discloses priming substrates, among which are polycarbonate films, that are inkjet printed on with radiation curable inks, such as UV-curable ink.

However, surface treatments of polycarbonate surfaces, such as for example flame oxidation, UV treatment using H-bulb, corona treatment or plasma treatment before printing do not provide sufficient print quality, particularly not in terms of adhesion, scratch resistance and smoothness of the printed layer.

Current priming or coating techniques of polycarbonate surfaces usually also do not provide sufficient print quality, particularly not in terms of adhesion, scratch resistance and smoothness of the printed layer. Moreover, intermediate primer or coating layers between polycarbonate substrate and ink layer are not always wanted. Typically, the bond between the primer and the ink layer and the primer and the substrate is only intended to provide short term adhesion performance. For extreme adhesion strength, the ink layer must be able to form a chemical bond with the substrate that is printed on. Furthermore an additional layer of primer between the substrate and the ink layer is another layer receptive towards delamination in extreme adhesion tests, such as water immersion tests or thermal shock tests.

Up till now, to the best of the knowledge of the inventors of the current invention, no inkjet method and means are currently available for providing polycarbonate surfaces with radiation-curable ink images meeting the quality standards as required in for example applications as automotive interior, glazing of cars, buildings, lighting, lenses, particularly with regard to wear-resistance, strength of adhesion of the ink, and prevention of the occurrence of cracks in the ink layer.

Therefore, for applications such as decorating polycarbonate substrates for use in automotive interior applications, in glazing such as glazing of cars, buildings, construction of lenses, and in lighting applications, screen printing is nowadays still the preferred technology.

US2016/0193826A1 discloses a method for forming articles having a decorative surface, for example for use in the automotive industry, comprising screen printing an ink composition comprising a solvent-based heat-curable composition onto at least one major surface of a thermoformable sheet, curing said curable composition to obtain a printed sheet and thermoforming the printed sheet to obtain a decorated article. Example A of US2016/0193826A1 discloses screen printing of heat-curable inks comprising a solvent mixture with an undefined amount of cyclohexanone on a sheet of clear Makrofol™ polycarbonate, followed by drying and thermoforming. It is described in US2016/0193826A1 that it is believed that the use of cyclohexanone as a solvent in the ink and the use of the polycarbonate as thermoformable polymeric sheet has the advantage to greatly improve the penetration into the thermoformable polymeric sheet of the ink material containing the ink composition and the solvent in which the ink composition is soluble.

One of ordinary skill in the art appreciates the differences between various print methods and recognizes that a combination of ink and receiving substrate that results in high image quality in one printing method often exhibits an entirely different image quality with another print method. For example, in contact printing methods such as screen printing, a blade forces the ink to advance and wet the receiving substrate. In the case of non-contact printing methods such as inkjet printing, the individual ink drops are merely deposited on the surface. In order to achieve good image quality, the ink drops need to spread, join together, and form a substantially uniform, leveled film. This process requires a low advancing contact angle between the ink and the substrate. For any given ink/substrate combination, the advancing contact angle is typically significantly greater than the receding contact angle. Accordingly, ink/substrate combinations that result in good image quality when printed with contact methods such as screen printing, often exhibit insufficient wetting when imaged with non-contact printing methods such as inkjet printing. Insufficient wetting results in low radial diffusion of the individual ink drops on the surface of the substrate, low colour density, and banding effects (e.g. gaps between rows of drops). Another important difference between screen printing and inkjet printing is the physical properties of the ink. Screen printing ink compositions typically contain over 40 wt% solids and have a viscosity of at least two orders of magnitude greater than the viscosity of inkjet printing inks. It is not generally feasible to dilute a screen printing ink to make it suitable for inkjet printing. Furthermore, the polymers employed in screen printing inks are typically high in molecular weight and exhibit significant elasticity. In contrast, inkjet ink compositions are typically Newtonian.

Screen printing, however, has various downsides, hampering fast and efficient production time with economically acceptable measures. That is to say, for screen printing, switching screens in between printing steps is time consuming, and an idle time is required in between subsequent screen printing steps. Moreover, the technology is relatively expensive from an economic perspective when small numbers of prints are required.

Consequently, there is still a need for an economically feasible process for printing of ink on polycarbonate substrates of good print quality, in particular with regard to adhesion between ink and polycarbonate substrate, scratch resistance and smoothness of the printed layer.

It is therefore a first objective of the invention to provide simplified methods for printing of ink, such as conductive ink tracks, on polycarbonate substrates resulting in good print quality, in particular with regard to adhesion between ink and polycarbonate substrate, scratch resistance and smoothness of the printed layer.

It is a second object of the invention to provide methods for printing of ink, such as conductive ink tracks, on polycarbonate substrates resulting in good or improved print quality, in particular with regard to adhesion between ink and polycarbonate substrate, scratch resistance and smoothness of the printed layer, wherein said methods are economically feasible when small numbers of prints are required.

It is a third objective of the invention to provide simplified methods for printing of ink, such as conductive ink tracks, on polycarbonate substrates resulting in good or improved print quality after thermoforming, in particular with regard to adhesion between ink and polycarbonate substrate and formation of cracks.

It is fourth object of the invention to provide methods for printing of ink, such as conductive ink tracks, on polycarbonate substrates resulting in good or improved print quality after thermoforming, in particular with regard to adhesion between ink and polycarbonate substrate and formation of cracks, wherein said methods are economically feasible when small numbers of prints are required.

### SUMMARY OF THE INVENTION

The inventors have established that at least one of the above objectives is achieved by first treating a polycarbonate sheet or film with a treating fluid being a homogeneous liquid at a temperature between 15 and 35°C, comprising at least 10 wt% of one or more cyclic ketones being liquid at a temperature between 15 and 35°C, based on the weight of the homogeneous liquid phase, wherein the remainder of the treating fluid consists of diacetone alcohol, and by subsequently inkjet printing and curing a radiation-curable ink, such as a radiation-curable ink comprising metal nanoparticles, on the treated polycarbonate substrate having a limited but non-zero weight percentage of the one or more cyclic ketones being liquid at a temperature between 15 and 35°C.

It was found that treating a polycarbonate substrate with the treating fluid swells the polycarbonate in the treated areas such that the polycarbonate surface '*opens up*' and allows the radiation-curable ink and the swollen polycarbonate surface to form an interlocking layer with improved wetting and adhesion properties. It was further found that the treated polycarbonate surface returned to the '*closed*' non-swollen state when all of said treating fluid was removed from the treated polycarbonate substrate. On the other hand it was established that leaving more than 1 wt% of the treating fluid, based on the weight of the treating fluid, on and/or in the treated polycarbonate substrate resulted in inferior print quality. Good print quality, in terms of adhesion and surface smoothness, was obtained when the amount of the treating fluid was between 0.05 and 1 wt%, based on the weight of the treated polycarbonate substrate just before printing.

Accordingly, in a first aspect of the invention a method for printing radiation-curable ink onto a polycarbonate substrate is provided, said method comprising the steps of:
a) providing a polycarbonate substrate in the form of a sheet or film having a thickness and having a first and a second surface;
b) providing a treating fluid being a homogeneous liquid at a temperature between 15 and 35°C, comprising at least 10 wt% of one or more cyclic ketones being liquid at a temperature between 15 and 35°C, based on the weight of the homogeneous liquid phase, wherein the remainder of the treating fluid consists of diacetone alcohol;
c) treating at least part of the at least first surface of the polycarbonate substrate of step (a) with the treating fluid of step (b) for a period of at least 5 seconds at a temperature between 15 and 35°C, resulting in a treated polycarbonate substrate layer with swollen areas where the at least part of the at least first surface is treated with the treating fluid, wherein the one or more cyclic ketones being liquid at a temperature between 15 and 35°C are distributed across at least part of the thickness of the polycarbonate substrate;
d) optionally rinsing the at least first surface of the treated polycarbonate substrate layer obtained in step (c) with diacetone alcohol to remove an excess of the one or more cyclic ketones being liquid at a temperature between 15 and 35°C;
e) optionally drying the treated polycarbonate substrate layer obtained in step (c) or (d) to reduce the weight percentage of treating fluid in and/or on the treated polycarbonate substrate to between 0.05 and 1 wt%, based on the weight of the treated polycarbonate substrate;
f) providing a treated polycarbonate substrate obtained in any one of steps (c) to (e) wherein the amount of the treating fluid on and/or in the treated polycarbonate substrate is between 0.05 and 1 wt%, based on the weight of the treated polycarbonate substrate;
g) applying radiation-curable ink onto at least part of the swollen areas of the at least first surface of the treated polycarbonate substrate provided in step (f) using inkjet printing;
h) curing the ink applied in step (g) such that the ink adheres to the surface of the polycarbonate substrate.

In a preferred embodiment, the radiation-curable ink of step (g) comprises metal nanoparticles dispersed therein, molecularly dissolved metal-precursors or dispersed metal-precursor nanoparticles to provide conductive tracks on the treated polycarbonate substrate.

In a second aspect, the invention relates to inkjet printed polycarbonate substrates, such as inkjet printed electronics, obtained by or obtainable by the process as defined hereinbefore.

### DEFINITIONS

The term '*primer*' has its regular scientific meaning throughout the text, and here refers to a coating put on the surface of a polycarbonate substrate before overlaying the polycarbonate substrate with a further layer of radiation-curable ink. Priming a polycarbonate substrate with a primer is intended to improve adhesion of the further layer of radiation-curable ink to the surface of the substrate material. A '*primer*' as used herein forms a physical intermediate layer of primer material between the polycarbonate substrate and the further layer of radiation-curable ink. In other words, the layer of radiation-curable ink is applied onto the primer and not onto the polycarbonate substrate.

The term *'polycarbonate'* has its regular scientific meaning throughout the text, and here refers to a thermoset plastic material and a thermo(softening) plastic material, suitable for providing as a sheet or film of polymer material, and comprising (alternating) carbonate units in the polymer chain. The term *'polycarbonate'* as used herein also encompasses copolymers.

The term '*inkjet*' has its regular scientific meaning throughout the text, and here refers to the type of computer printing that transforms a digital image to a print by propelling droplets of ink onto the surface of a polycarbonate substrate.

The '*piezo inkjet*' has its regular scientific meaning throughout the text, and here refers to drop-on-demand technology using piezoelectric printheads for applying droplets of radiation-curable ink to a polycarbonate substrate.

The term '*swelling*', or '*swollen*', has its regular scientific meaning throughout the text, and here refers to at least a portion of a surface of a polycarbonate substrate that adopted an increased volume in a second state, arrived at by physically and/or chemically treating said portion of the surface in a first state.

### BRIEF DESCRIPTION OF THE DRAWINGS

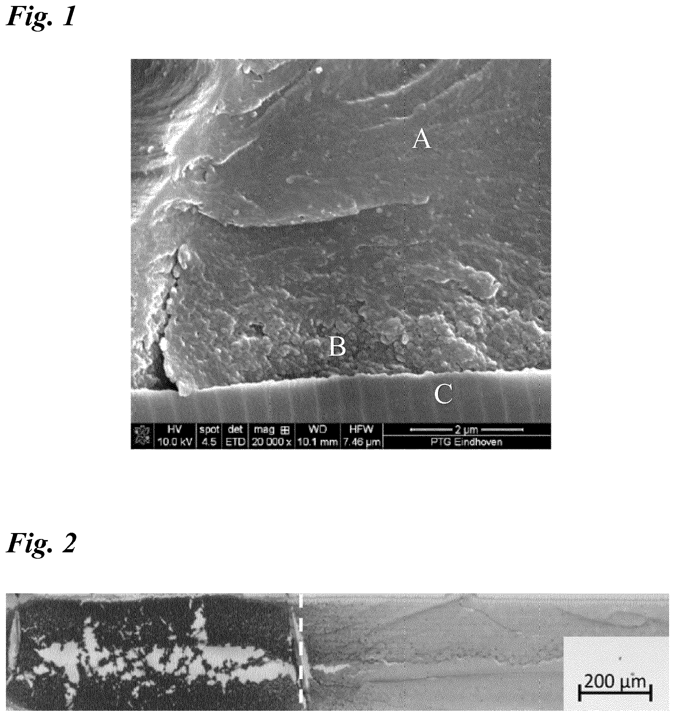

Figure 1 is a microscopic photograph of the interface of a polycarbonate substrate pretreated with a treating fluid according to the invention and a UV-curable ink printed thereon (magnification 20.000). 'A' refers to 'cured UV-curable ink, 'B' to 'intermediate layer' and 'C' to 'polycarbonate layer'.
Figure 2 is a photograph showing the difference in visual appearance between silver conductive tracks printed, cured and sintered onto polycarbonate pretreated with a treating fluid according to the invention (right-hand side of dotted line) and conductive tracks printed, cured and sintered onto polycarbonate that was not pretreated (left-hand side of dotted line) on a single sheet of polycarbonate.

### DETAILED DESCRIPTION OF THE INVENTION

In a first aspect, the invention relates to a method for printing radiation-curable ink onto a polycarbonate substrate, said method comprising the steps of:
a) providing a polycarbonate substrate in the form of a sheet or film having a thickness and having a first and a second surface;
b) providing a treating fluid being a homogeneous liquid at a temperature between 15 and 35°C, comprising at least 10 wt% of one or more cyclic ketones being liquid at a temperature between 15 and 35°C, based on the weight of the homogeneous liquid phase, wherein the remainder of the treating fluid consists of diacetone alcohol;
c) treating at least part of the at least first surface of the polycarbonate substrate of step (a) with the treating fluid of step (b) for a period of at least 5 seconds at a temperature between 15 and 35°C, resulting in a treated polycarbonate substrate layer with swollen areas where the at least part of the at least first surface is treated with the treating fluid, wherein the one or more cyclic ketones being liquid at a temperature between 15 and 35°C are distributed across at least part of the thickness of the polycarbonate substrate;
d) optionally rinsing the at least first surface of the treated polycarbonate substrate layer obtained in step (c) with diacetone alcohol to remove an excess of the one or more cyclic ketones being liquid at a temperature between 15 and 35°C;
e) optionally drying the treated polycarbonate substrate layer obtained in step (c) or (d) to reduce the weight percentage of treating fluid in and/or on the treated polycarbonate substrate to between 0.05 and 1 wt%, based on the weight of the treated polycarbonate substrate;
f) providing a treated polycarbonate substrate obtained in any one of steps (c) to (e) wherein the amount of the treating fluid on and/or in the treated polycarbonate substrate is between 0.05 and 1 wt%, based on the weight of the treated polycarbonate substrate;
g) applying radiation-curable ink onto at least part of the swollen areas of the at least first surface of the treated polycarbonate substrate provided in step (f) using inkjet printing;
h) curing the ink applied in step (g) such that the ink adheres to the surface of the polycarbonate substrate.

### Step (a)

The polycarbonate substrate provided for in step (a) has the form of a sheet or film. The polycarbonate layer or film can have any width and/or length. The polycarbonate layer or film preferably has a thickness of between 0.1 and 12 mm, more preferably between 0.5 and 7 mm, such as 2, 3, 4, 5 or 6 mm.

The first surface of the polycarbonate substrate may be subjected to plasma treatment before step (c). In another embodiment, only those parts of the first surface of the polycarbonate substrate of step (a) that are printed on in step (g) are subjected to plasma treatment before step (c).

Likewise, the first surface of the polycarbonate substrate may be subjected to flame oxidation before step (c). In another embodiment, only those parts of the first surface of the polycarbonate substrate of step (a) that are printed on in step (g) are subjected to flame oxidation before step (c).

Likewise, the first surface of the polycarbonate substrate may be subjected to corona treatment before step (c). In another embodiment, only those parts of the first surface of the polycarbonate substrate of step (a) that are printed on in step (g) are subjected to corona treatment before step (c).

Similarly, the first surface of the polycarbonate substrate may be subjected to UV treatment using a H-bulb before step (c). In another embodiment, only those parts of the first surface of the polycarbonate substrate of step (a) that are printed on in step (g) are subjected to UV treatment using a H-bulb before step (c).

The polycarbonate substrate provided for in step (a) can be a laminate having additional layers, provided that the at least part of the at least first surface of the polycarbonate substrate that is treated with the treating fluid is not laminated and can thus be treated and printed on.

If the polycarbonate substrate is not a laminate, and the second surface of the polycarbonate substrate is also printed on in step (g), the second surface may be subjected to plasma treatment, UV treatment using a H-bulb, corona treatment or flame oxidation before step (c). In another embodiment, if the polycarbonate substrate is not a laminate, and the second surface of the polycarbonate substrate is also printed on in step (g), only those parts of the second surface of the polycarbonate substrate of step (a) that are printed on in step (g) are subjected to plasma treatment, UV treatment using a H-bulb, corona treatment or flame oxidation before step (c).

In a very preferred embodiment, the polycarbonate in the polycarbonate substrate is the reaction product of monomers bisphenol A and phosgene. In another embodiment, the polycarbonate in the polycarbonate substrate is the reaction product of monomers bisphenol A and diphenyl carbonate. In still another embodiment, the polycarbonate in the polycarbonate substrate is a polycarbonate siloxane co-polymer based on bisphenol A, such as Lexan EXL (Sabic) and Lexan HFD (Sabic), or a polycarbonate sebacic acid co-polymer based on bisphenol A, such as Lexan SLX (Sabic). In yet another embodiment, the polycarbonate in the polycarbonate substrate is high heat polycarbonate, such as Apec (Covestro) or Lexan XHT (Sabic).

The polycarbonate in the polycarbonate substrate preferably has a weight average molecular weight Mw between 20 and 40 kDa, as measured in accordance with gel permeation chromatography, preferably between 25 and 35 kDa, such as 30 kDa.

The polycarbonate substrate preferably has a total luminous transmittance of at least 85% and a haze lower than 1% (both measured in accordance with ASTM D1003 - 2013).

### Step (b)

In step (b), a treating fluid is provided. The treating fluid comprising at least 10 wt% of one or more cyclic ketones being liquid at a temperature between 15 and 35°C. The remainder of the treating fluid consists of diacetone alcohol The treating fluid is a homogeneous liquid at a temperature between 15 and 35°C, which means that the one or more cyclic ketones being liquid at a temperature between 15 and 35°C, and the diacetone alcohol if present, are mutually soluble and do not phase separate at a temperature between 15 and 35°C.

In an embodiment, the treating fluid in step (b) comprises between 10 and 100 wt% of the one or more cyclic ketones being liquid at a temperature between 15 and 35°C and between 0 and 90 wt% of diacetone alcohol.

In another embodiment, the treating fluid in step (b) comprises between 20 and 100 wt% of the one or more cyclic ketones being liquid at a temperature between 15 and 35°C and between 0 and 80 wt% of diacetone alcohol.

In still another embodiment, the treating fluid in step (b) comprises between 30 and 100 wt% of the one or more cyclic ketones being liquid at a temperature between 15 and 35°C and between 0 and 70 wt% of diacetone alcohol, such as:
between 40 and 100 wt% of the one or more cyclic ketones being liquid at a temperature between 15 and 35°C and between 0 and 60 wt% of diacetone alcohol,
between 50 and 100 wt% of the one or more cyclic ketones being liquid at a temperature between 15 and 35°C and between 0 and 50 wt% of diacetone alcohol,
between 60 and 100 wt% of one or more cyclic ketones being liquid at a temperature between 15 and 35°C and between 0 and 40 wt% of diacetone alcohol,
between 70 and 100 wt% of the one or more cyclic ketones being liquid at a temperature between 15 and 35°C and between 0 and 30 wt% of diacetone alcohol,
between 80 and 100 wt% of the one or more cyclic ketones being liquid at a temperature between 15 and 35°C and between 0 and 20 wt% of diacetone alcohol, and
between 90 and 100 wt% of the one or more cyclic ketones being liquid at a temperature between 15 and 35°C and between 0 and 10 wt% of diacetone alcohol.

In a very preferred embodiment, the treating fluid in step (b) consists of the one or more cyclic ketones being liquid at a temperature between 15 and 35°C.

The one or more cyclic ketones being liquid at a temperature between 15 and 35°C are preferably selected from the group consisting of unsubstituted cyclic ketones, cyclic ketones substituted with at least one alkyl group and mixtures thereof. More preferably, the one or more cyclic ketones being liquid at a temperature between 15 and 35°C are selected from the group consisting of unsubstituted cyclic ketones and mixtures thereof.

In a particularly preferred embodiment, the one or more cyclic ketones being liquid at a temperature between 15 and 35°C are selected from the group consisting of cyclopentanone, 3,5,5-trimethyl-2-cyclohexen-1-one (isophorone), 1-cyclohexylpropan-1-one, 1-cyclohexylethanone, cyclohexanone and mixtures thereof, most preferably the cyclic ketone is cyclohexanone.

In a very preferred embodiment, the treating liquid as defined hereinbefore comprises at least 10 wt% of cyclohexanone, based on the weight of the homogeneous liquid phase, wherein the remainder of the treating fluid consists of diacetone alcohol.

### Step (c)

In step (c), at least part of at least the first surface of the polycarbonate substrate of step (a) is treated with the treating fluid of step (b) for a period of at least 5 seconds at a temperature between 15 and 35°C.

The treatment of the polycarbonate substrate in step (c) with the treating fluid of step (b) results in swollen or plasticized areas where the surface of the polycarbonate substrate is treated. This swelling is caused by the one or more cyclic ketones being liquid at a temperature between 15 and 35°C in the treating fluid penetrating the polycarbonate substrate. As a result, the one or more cyclic ketones are distributed across at least part of the thickness of the polycarbonate substrate. As will be appreciated by those skilled in the art, if the thickness of the polycarbonate substrate is limited, and/or if both sides of the polycarbonate substrate are treated and/or if the period of treatment is extended, the one or more cyclic ketones can be distributed across the whole thickness of the polycarbonate substrate.

The method as defined hereinbefore is a method for printing radiation-curable ink onto a polycarbonate substrate. The inventors have established that the one or more cyclic ketones applied to the substrate do not only swell or plasticize the treated areas of polycarbonate substrate but may, depending on the amount of the one or more cyclic ketones applied, also affect the look and texture of the polycarbonate substrate. Applying too much of the one or more cyclic ketones may result in visual patterns and/or orange peel on the treated areas. Orange peel may negatively affect adhesion of the radiation-curable ink. Applying too much of the one or more cyclic ketones may further result in unwanted warping of the polycarbonate substrate.

Accordingly, in a preferred embodiment, between 0.06 and 200 g/m², such as between 0.5 and 200 g/m², between 1 and 200 g/m², and between 10 and 200 g/m², more preferably between 0.06 and 150 g/m², such as between 0.5 and 150 g/m², between 1 and 150 g/m², and between 10 and 150 g/m², even more preferably between 0.06 and 100 g/m², such as between 0.5 and 100 g/m², between 1 and 100 g/m², and between 10 and 100 g/m², still more preferably between 0.06 and 50 g/m², such as between 0.5 and 50 g/m², between 1 and 50 g/m², and between 10 and 50 g/m², yet more preferably between 0.06 and 20 g/m², such as between 0.5 and 20 g/m², between 1 and 20 g/m², and between 10 and 20 g/m², based on the treated area, of the treating fluid is applied to the at least part of the at least first surface of the polycarbonate substrate of step (a).

The inventors have found that the use of diacetone alcohol in the treating fluid can diminish the visual patterns, whitening, haze and/or orange peel of the treated areas of the polycarbonate substrate and further the adhesion of the radiation-curable ink. Without wishing to be bound by any theory, it is believed that diluting the one or more cyclic ketones being liquid at a temperature between 15 and 35°C with diacetone alcohol reduces the rate of evaporation of the one or more cyclic ketones from the polycarbonate substrate such that the one or more cyclic ketones can swell the polycarbonate substrate whereas they can also be partially removed in an oven without forming haze, whitening and visual patterns on the polycarbonate substrate.

In a preferred embodiment, the treatment in step (c) is performed for a period of at least 40 seconds, more preferably for a period of at least 60 seconds.

In a preferred embodiment, the whole first surface of the polycarbonate substrate of step (a) is treated with the treating fluid of step (b) in step (c).

In another embodiment, the polycarbonate substrate is not laminated and both whole surfaces of the polycarbonate substrate of step (a) are treated in step (c) with the treating fluid of step (b). This can for example be performed by completely immersing the (not laminated) polycarbonate substrate of step (a) in the treating fluid of step (b).

In another preferred embodiment, only those parts of the first surface of the polycarbonate substrate of step (a) that are printed on in step (g) are treated with the treating fluid of step (b) in step (c). This can for example be accomplished using inkjet printing of the solvent of step (b) onto the polycarbonate substrate, such as piezo drop on demand inkjet printing or continuous inkjet printing, preferably continuous inkjet printing. Employing inkjet printing to apply the treating liquid onto the polycarbonate substrate may require the addition of one or more of thickeners and surfactants to the treating liquid before step (c) to adjust the viscosity, rheology and/or (dynamic) surface tension.

As explained hereinbefore, applying too much of the one or more cyclic ketones may result in unwanted warping of the polycarbonate substrate, particularly if the polycarbonate substrate has a thickness of between 0.1 and 0.5 mm. Hence, in a preferred embodiment, the polycarbonate substrate of step (a) has a thickness of between 0.1 and 0.5 mm, and only those parts of the first surface of the polycarbonate substrate of step (a) that are printed on in step (g) are treated with the treating fluid of step (b) in step (c), preferably using inkjet printing. In another preferred embodiment, the polycarbonate substrate of step (a) has a thickness of between 0.1 and 0.5 mm, and only those parts of the first surface of the polycarbonate substrate of step (a) that are printed on in step (g) are treated with the treating fluid of step (b) in step (c), preferably using inkjet printing, in an amount of between 0.06 and 20 g/m², such as between 0.5 and 20 g/m², between 1 and 20 g/m², between 5 and 20 g/m², between 10 and 20 g/m², between 0.06 and 8 g/m², between 0.06 and 10 g/m² and between 0.06 and 15 g/m², based on the treated area.

In another embodiment, the polycarbonate substrate is not laminated, both surfaces of the polycarbonate substrate are printed on in step (g) and only those parts of the first and second surfaces of the polycarbonate substrate of step (a) that are printed on in step (g) are treated in step (c) with the treating fluid of step (b). This can for example be accomplished using inkjet printing of the solvent of step (b) onto the polycarbonate substrate, such as piezo drop on demand inkjet printing or continuous inkjet printing, preferably continuous inkjet printing. As will be appreciated by the skilled person, the first surface of the polycarbonate substrate can be treated with the treating liquid first and then the second surface. Optional steps (d) and (e) can be performed in between treating the first and the second surface of the polycarbonate substrate. Moreover, printing step (g) and curing step (h) can be performed on the treated first surface of the polycarbonate substrate of step (f) before the second surface of the polycarbonate substrate is treated with the treating fluid.

In a preferred embodiment, the one or more cyclic ketones of the treating fluid of step (b) are homogeneously distributed across at least part of the thickness of the polycarbonate substrate obtained in step (c).

In a preferred embodiment, the treated polycarbonate obtained in step (c) has a total luminous transmittance of at least 85% and a haze lower than 1% (both measured in accordance with ASTM D1003 - 2013).

### Steps (d) and (e)

Without wishing to be bound by any theory, it is believed that an excess of the treating fluid applied onto and/or distributed across at least part of the thickness of the polycarbonate substrate adversely affects wetting by and adhesion of radiation-curable ink in step (g).

Hence, as defined in step (f), before applying the radiation-curable ink in step (g), the amount of the one or more cyclic ketones on and/or in the treated polycarbonate substrate is between 0.05 and 1 wt%, based on the weight of the treated polycarbonate substrate.

It was found that the treated polycarbonate surface returned to the '*closed*' non-swollen state when all of said treating fluid was removed from the treated polycarbonate substrate. On the other hand it was established that leaving more than 1 wt% of the treating fluid, based on the weight of the treating fluid, on and/or in the treated polycarbonate substrate resulted in inferior print quality. Good print quality, in terms of adhesion and surface smoothness (no cracking), was obtained when the amount of the treating fluid was between 0.05 and 1 wt%, based on the weight of the treated polycarbonate substrate just before printing.

In a preferred embodiment, the amount of the treating fluid on and/or in the treated polycarbonate substrate in step (f) is between 0.05 and 0.8 wt%, more preferably between 0.1 and 0.7 wt%, even more preferably between 0.1 and 0.6 wt%, still more preferably between 0.2 and 0.6 wt%, such as about 0.5 wt%.

Reduction of the amount of the treating fluid on and/or in the treated polycarbonate substrate to between 0.05 and 0.5 wt% is believed to prevent or reduce blistering in laminates prepared from the printed polycarbonate substrate obtained in step (h).

In an embodiment the method as defined hereinbefore comprises step (d) as a mandatory step. Such a step is only expedient if the whole first surface, or the whole first and second surfaces, of the polycarbonate surface has been treated in step (c). Moreover, such a step is only expedient if there are any leftovers of the treating fluid on the first and/or second surface that are not absorbed by said surfaces after step (c).

Step (d) can for example be performed by by rinsing the treated polycarbonate substrate obtained in step (c) 1 to 10 times, such as 2, 3 or 4 times, with diacetone alcohol.

In a preferred embodiment the method as defined hereinbefore comprises step (e) as a mandatory step, more preferably steps (d) and (e), to obtain the amount of the treating fluid on and/or in the treated polycarbonate substrate as defined in step (f).

The drying of the treated polycarbonate substrate in step (e) is preferably performed in a hot air circulating oven, preferably at a temperature of between 35 and 120°C. Drying in a hot air circulating oven is preferably applied when the treating liquid comprises diacetone alcohol.

In another preferred embodiment, the drying of the treated polycarbonate substrate in step (e) is performed by evaporation under ambient conditions for a period of at least 10 hours preferably between 10 and 20 hours, such as about 12 hours. Drying by evaporation under ambient conditions is preferably applied when the treating liquid does not comprise diacetone alcohol.

In a very preferred embodiment, step (e) is performed to reduce the weight percentage of the treating fluid on and/or in the treated polycarbonate substrate to between 0.05 and 0.8 wt%, based on the weight of the treated polycarbonate substrate, more preferably to between 0.1 and 0.7 wt%, even more preferably to between 0.1 and 0.6 wt%, still more preferably to between 0.2 and 0.6 wt%, such as about 0.5 wt%.

In a preferred embodiment, the treated polycarbonate obtained in step (d) and/or (e) has a total luminous transmittance of at least 85% and a haze lower than 1% (both measured in accordance with ASTM D1003 - 2013).

### Step (f)

In step (f), a treated polycarbonate substrate is provided obtained in any one of steps (c) to (e) wherein the amount of the treating fluid on and/or in the treated polycarbonate substrate is between 0.05 and 1 wt%, based on the weight of the treated polycarbonate substrate, more preferably between 0.05 and 0.8 wt%, even more preferably between 0.1 and 0.7 wt%, still more preferably between 0.1 and 0.6 wt%, yet more preferably between 0.2 and 0.6 wt%, such as about 0.5 wt%.

The amount of the treating fluid on and/or in the treated polycarbonate substrate of step (f) can be the direct result of step (c) such that steps (d) and (e) are not necessary. Alternatively, the amount of the treating fluid on and/or in the treated polycarbonate substrate of step (f) is obtained by applying step (d) or steps (d) and (e).

In a preferred embodiment, the treated polycarbonate provided in step (f) has a total luminous transmittance of at least 85% and a haze lower than 1% (both measured in accordance with ASTM D1003 - 2013).

### Step (g)

In step (g), radiation-curable ink is applied to at least part of the swollen areas of the at least first surface of the treated polycarbonate substrate provided in step (f) using inkjet printing.

The term radiation-curable ink as used herein refers to ink that is applied in liquid form and is fixed onto the substrate upon treatment with radiation. Typical types of radiation that can be used to cure inks are infrared radiation (heat), UV-radiation, electron-beam radiation and combinations thereof. The type/types of radiation that can be applied or is/are required to cure a radiation-curable ink depend(s) on the composition of the radiation-curable ink.

In a first preferred embodiment, the radiation-curable ink in step (g) is a UV-curable ink. The term '*UV-curable ink'* is well-known in the art of printing and refers to inks comprising liquid reactive monomers and/or oligomers, a UV photoinitiator and preferably dyes or pigments. Upon excitation with UV-light, the UV photoinitiator forms reactive species that can initiate oligomerization, polymerization and/or crosslinking of the reactive monomers and/or oligomers.

In a preferred embodiment, the reactive monomers and/or oligomers comprise radically polymerizable monomers and/or oligomers chosen from the group consisting of acrylates, vinyl ethers, allyl ethers, maleimides, thiols and mixtures thereof.

In another preferred embodiment, the reactive monomers and/or oligomers comprise cationically polymerizable monomers and/or oligomers chosen from the group consisting of epoxides, vinyl ethers, allyl ethers, oxetanes and combinations thereof.

The monomers and/or oligomers may comprise cross-linking monomers and/or oligomers. Cross-linking monomers and/or oligomers have, depending on the type of reactive group, two or more reactive groups per monomer, and can create a three-dimensional network.

Naturally, radically polymerizable monomers and/or oligomers are to be combined with one or more radical polymerization photoinitiators and cationically polymerizable resins are to be combined with one or more cationic polymerization photoinitiators.

Photoinitiators for radical polymerization and cationic polymerization are well-known in the art. In this regard, reference is made to J.P. Fouassier, J.F. Rabek (ed.), Radiation Curing in Polymer Science and Technology: Photoinitiating systems, Vol. 2, Elsevier Applied Science, London and New York 1993, and to J.V. Crivello, K. Dietliker, Photoinitiators for Free Radical, Cationic & Anionic Photopolymerization, 2nd Ed., In: Surface Coating Technology, Editor: G. Bradley, Vol. III, Wiley & Sons, Chichester, 1999, for a comprehensive overview of photoinitiators. It is within the skills of the artisan to match the type of polymerizable resin, the type of radiation and the photoinitiator.

UV-curable inks for use in the present method can also comprise metal nanoparticles dispersed therein, molecularly dissolved metal-precursors or dispersed metal-precursor nanoparticles to provide conductive tracks on the treated polycarbonate substrate. Preferred metal nanoparticles are silver nanoparticles or copper nanoparticles. Preferred metal-precursor nanoparticles are copper oxide nanoparticles.

In another preferred embodiment, the radiation-curable ink in step (g) is an EB-curable ink. The term '*EB-curable ink'* is also well-known in the art of printing and refers to inks comprising liquid reactive monomers and/or oligomers and preferably dyes or pigments. Upon excitation with radiation from an electron beam, also called a cathode-ray tube (CRT), energetic electrons initiate oligomerization, polymerization and/or crosslinking of the reactive monomers and/or oligomers. Hence, expensive UV photoinitiators are not needed, but can nevertheless be present, in EB-curable inks.

Preferred reactive monomers and/or oligomers are those described hereinbefore in the context of UV-curable inks.

EB-curable inks for use in the present method can also comprise metal nanoparticles dispersed therein, molecularly dissolved metal-precursors or dispersed metal-precursor nanoparticles to provide conductive tracks on the treated polycarbonate substrate. Preferred metal nanoparticles are silver nanoparticles or copper nanoparticles. Preferred metal-precursor nanoparticles are copper oxide nanoparticles.

In still another preferred embodiment, the radiation-curable ink in step (g) is a solvent-based ink. The term '*solvent-based ink'* is well-known in the art of printing and refers to inks comprising resin, dyes or pigments and a non-aqueous and non-reactive carrier solvent that keeps the other components in liquid form. They are typically applied onto non-porous substrates. Non-limiting examples of resins that can be part of solvent-based inks are vinyl-based, vinyl-acrylic-based, epoxy-based, polyurethane-based or cellulose-based.

Radiation-curable solvent-based inks for use in the present method can also comprise metal nanoparticles dispersed therein, molecularly dissolved metal-precursors or dispersed metal-precursor nanoparticles to provide conductive tracks on the treated polycarbonate substrate. Preferred metal nanoparticles are silver nanoparticles or copper nanoparticles. Preferred metal-precursor nanoparticles are copper oxide nanoparticles.

General examples of radiation-curable ink on a solvent basis comprising metal nanoparticles that can suitably be used in the method of the present invention are disclosed in US2009/0053400A1. Specific examples of radiation-curable ink on a solvent basis comprising metal nanoparticles that can suitably be used in the method of the present invention are DuPont™ PE410, comprising silver particles, and Agfa ORGACON™ SI-J20X, comprising silver nanoparticles.

The radiation-curable ink is applied to at least part of the swollen areas of the treated at least first surface of step (f) using inkjet printing.

In a preferred embodiment, the radiation-curable ink is applied using piezo drop on demand inkjet printing or continuous inkjet printing, more preferably piezo drop on demand inkjet printing.

The radiation-curable ink as defined hereinbefore typically comprises additives to control rheology and droplet formation, such as surfactants and anti-foaming agents.

In a very preferred embodiment, the ink has a static surface tension at a temperature of 20 °C of between 30 and 60 mN/m as measured with a tensiometer, more preferably between 20 and 40 mN/m, even more preferably between 25 and 35 mN/m.

In another preferred embodiment, the radiation-curable ink as defined hereinbefore is a Newtonian fluid having a viscosity at a temperature of 20°C of between 1 and 100 mPa·s at a shear rate of between 100 and 1000 1/s, more preferably between 2 and 40 mPa·s, even more preferably between 5 and 25 mPa·s, still more preferably between 8 and 15 mPa·s.

In another embodiment, at least part of the second surface of the polycarbonate substrate is also treated with the treating fluid in step (c) and radiation-curable ink is applied to at least part of the swollen areas of the treated second surface of step (f). Preferably, radiation-curable ink is applied to the second surface only after the radiation-curable ink on the first surface has been cured in step (h).

### Step (h)

In step (h), the radiation-curable ink applied in step (g) is cured such that the ink adheres to the surface of the treated polycarbonate substrate. The term '*curing*' as used herein means that the liquid ink deposited onto the surface of the polycarbonate substrate takes a solid or at least semi-solid form.

The curing mechanism of radiation-curable solvent-based inks differs from the curing mechanism of UV-curable and EB-curable inks. For radiation-curable solvent-based inks, curing requires evaporation of the solvent such that the resin can form a film layer onto the treated polycarbonate substrate. This can be accomplished by thermal drying, *i.e.* by applying infrared radiation.

Hence, in a preferred embodiment, the radiation-curable ink applied in step (g) is a radiation-curable solvent-based ink and curing in step (h) encompasses applying infrared radiation at a temperature of between 80 and 130°C for a period of between 10 and 60 minutes, preferably in an oven.

For UV-curable inks, curing requires subjecting the UV-curable ink deposited onto the treated polycarbonate substrate to UV- or EB-radiation. This radiation can be energetic electrons, X-rays or UV-radiation causing the reactive monomers and/or oligomers to react and/or crosslink. As explained hereinbefore, curing using UV-radiation requires the presence of UV photoinitiators in the radiation-curable composition. The type of photoinitiator applied determines the (optimum) wavelength of the UV-radiation needed. There are photoinitiators that are responsive to a broad spectrum of wavelengths in the UV-A (315-400 nm), UV-B (280-315 nm), and/or UV-C (100-280 nm) ranges. There are also photoinitiators that are responsive to the light of UV-leds emitting specific wavelengths such as about 365 nm, about 385 nm, about 395 nm, or about 405 nm.

Hence, in a preferred embodiment, the radiation-curable ink applied in step (g) is a UV-curable ink and curing in step (h) encompasses applying UV-radiation or EB-radiation to the ink layer. The amount of UV-radiation or EB-radiation determines the degree of cure. The amount of UV-radiation or EB-radiation can be chosen to fully cure the ink layer (so-called through cure) in one step, meaning that additional UV-radiation or EB-radiation does no longer result in a decrease of reactive groups in the ink layer. Alternatively, the amount of UV-radiation or EB-radiation can be chosen to partially cure the layer in a first step and fully cure the layer in a second step. If the print obtained in step (h) is to be laminated or over-coated with an additional layer, partial curing of the UV-curable ink in a first step, laminating or coating and subsequent fully curing the ink layer in a second step may be appropriate to get sufficient adhesion between the ink layer and the additional layer. If this two-step approach is used along with UV-radiation to cure the ink, the additional layer must not absorb UV-radiation.

For EB-curable inks, curing requires subjecting the EB-curable ink deposited onto the treated polycarbonate substrate to EB-radiation. This radiation comprises energetic electrons and X-rays. Curing using energetic electrons has the advantage that the energetic electron may create reactive species both in the ink and in the treated first surface of the polycarbonate layer such that chemical reactions may occur in the interface between ink and polycarbonate, resulting in additional adhesion.

Hence, in a preferred embodiment, the radiation-curable ink applied in step (g) is an EB-curable ink and curing in step (h) encompasses applying EB-radiation to the ink layer. The amount of EB-radiation determines the degree of cure. The amount of EB-radiation can be chosen to fully cure the ink layer (so-called through cure) in a single step, meaning that additional EB-radiation does no longer result in a decrease of reactive groups in the ink layer. Alternatively, the amount of EB-radiation can be chosen to partially cure the ink layer in a first step and fully cure the layer in a second step. If the print obtained in step (h) is to be laminated or over-coated with an additional layer, partial curing of the EB-curable ink in a first step, laminating/coating and subsequent fully curing the ink layer in a second step may be appropriate to get sufficient adhesion between the ink layer and the additional layer.

As explained hereinbefore the radiation-curable inks chosen from UV-curable, EB-curable and solvent-based inks can comprise metal nanoparticles dispersed therein, molecularly dissolved metal-precursors or dispersed metal-precursor nanoparticles to provide conductive tracks on the treated polycarbonate substrate. In order to enhance the electrical conductivity of the printed layers of radiation-curable inks on the polycarbonate surface, the metal nanoparticles may need to be sintered.

The term '*sintering*' in the context of the present invention should be construed as a method of forming aggregates of metal particles by heating them to a temperature below the melting temperature of the metal. During sintering, atoms at the surface of the metal nanoparticles diffuse across the surface causing fusion of the metal resulting in a more dense material. This diffusion takes place within a range of temperatures (substantially) below the melting temperature of the metal and is highest when the temperature is close to the melting temperature. It is within the skills of the artisan to choose appropriate sintering conditions that do not adversely affect the polycarbonate substrate.

Known sintering techniques for inkjet inks comprising metal nanoparticles or metallo-organic complexes are thermal sintering, photonic sintering, microwave sintering, plasma sintering, electrical sintering and sintering by chemical agents. In this respect, reference is made to A. Kamyshny et al., Metal-based inkjet inks for printed electronics, The Open Applied Physics Journal, 2011, 4, pp 19-36, which is incorporated herein by reference in its entirety.

For solvent-based inks, such a sintering step may be part of the curing step (h) with infrared radiation that is already needed to evaporate the solvent. For example, DUPONT™ PE410 silver inkjet ink is preferably dried at 130°C for 20 minutes to enhance conductivity. Agfa ORGACON™ SI-J20x nanosilver inkjet printing ink is preferably dried at 150°C for 30 minutes to sinter the silver particles and enhance electrical conductivity.

Hence, in a preferred embodiment, the radiation-curable ink applied in step (g) is a radiation-curable solvent-based ink comprising metal nanoparticles and curing in step (h) encompasses applying infrared radiation at a temperature of between 100 and 150°C for a period of between 10 and 60 minutes, preferably in an oven.

If the solvent-based ink comprises a metal precursor, the metal precursor needs to be converted to the metal before sintering can take place as an additional step. In an embodiment, the radiation-curable ink applied in step (g) is a radiation-curable solvent-based ink comprising metal precursor and curing step (h) is followed by a step of converting the metal precursor to the corresponding metal and a subsequent sintering step wherein infrared radiation is applied at a temperature of between 100 and 150°C for a period of between 10 and 60 minutes, preferably in an oven.

For UV-curable and EB-curable inks, a sintering step is always an additional step performed after curing step (h).

Hence, in a preferred embodiment, the radiation-curable ink applied in step (g) is a UV-curable or EB-curable ink comprising metal nanoparticles and curing step (h) is followed by a sintering step wherein infrared radiation is applied at a temperature of between 100 and 150°C for a period of between 10 and 60 minutes, preferably in an oven.

If the UV-curable or EB-curable ink comprises a metal precursor, the metal precursor needs to be converted to the metal before sintering can take place as an additional step. In an embodiment, the radiation-curable ink applied in step (g) is a UV-curable or EB-curable ink comprising metal precursor and curing step (h) is followed by a step of converting the metal precursor to the corresponding metal and a subsequent sintering step wherein infrared radiation is applied at a temperature of between 100 and 150°C for a period of between 10 and 60 minutes, preferably in an oven.

In a preferred embodiment, sintering of the metal in cured solvent-based, UV-curable or EB-curable ink as defined hereinbefore, after step (g), is performed using photonic curing with a flash lamp, *i.e.* with pulsed light, for example from a Xenon flash lamp, having a pulse length of about 10 microseconds to 15 milliseconds.

Photonic curing uses flash lamps to thermal process a thin film, such as a cured ink layer with metal therein, at a high temperature on a low temperature substrate, such as a polycarbonate substrate, without damaging it. In this respect, reference is made to K.A. Schroder, Mechanisms of Photonic Curing™: Processing High Temperature Films on Low Temperature Substrates, TechConnect Briefs, Volume 2, Nanotechnology 2011: Electronics, Devices, Fabrication, MEMS, Fluidics and Computational, pp 220-223, and to patent US7,820,097B1. With this technique silver and copper nanoparticles can be sintered. The pulse of the light of the flash lamp is so fast that the back side of the substrate is not heated appreciably during the pulse. After the pulse is over, the thermal mass of the substrate rapidly cools the layer with metal particles. The pulse is usually less than a millisecond in duration. Although the substrate at the interface with the ink layer with metal particles reaches a temperature far beyond its maximum working temperature, there is not enough time for its properties to be significantly changed.

As described hereinbefore, the printed polycarbonate surface obtained in step (h) may be laminated with another layer. Examples of additional layers that can advantageously be used are polycarbonate films or sheets, or thermoplastic polyurethane films or sheets. As will be appreciated by those skilled in the art, an additional polycarbonate layer to be laminated with the printed polycarbonate surface obtained in step (h) may be treated at the surface that is to be laminated with a treating fluid as defined hereinbefore before lamination. Likewise, an additional thermoplastic polyurethane layer to be laminated with the printed polycarbonate surface obtained in step (h) may be treated at the surface that is to be laminated with a treating fluid as defined hereinbefore before lamination.

In another preferred embodiment, an additional thermoplastic polyurethane layer to be laminated with the printed polycarbonate surface obtained in step (h) may be obtained by:
i) providing a thermoplastic polyurethane film having a thickness and having a first and a second surface;
ii) providing one or more organic T-type photochromic compounds;
iii) providing a solvent selected from the group of cyclic ketones as defined hereinbefore;
iv) preparing a solution by dissolving at least 0.1 wt%, based on the weight of the solution, of the one or more organic T-type photochromic compounds of step (ii) in the solvent of step (iii);
v) treating at least part of at least the first surface of the thermoplastic polyurethane film of step (i) with at least 100 g/m² of the solution of step (iv) for a period of at least 5 seconds at a temperature between 15 and 30°C, resulting in a self-supporting photochromic polymer film with swollen areas where the surface is treated with the solution, wherein the one or more organic T-type photochromic compounds and the solvent are distributed across at least part of the thickness of the thermoplastic polyurethane film;
vi) optionally removing an excess of the solution applied in step (v) from the surface of the self-supporting photochromic polymer film obtained in step (v);
vii) optionally drying the self-supporting photochromic polymer film obtained in step (v) or (vi) to reduce the weight percentage of solvent in the self-supporting photochromic polymer film.

The thermoplastic polyurethane film preferably has a thickness of between 0.05 mm and 6.50 mm, more preferably between 0.08 mm and 2.60 mm, even more preferably between 0.09 mm and 0.68 mm, such as about 0.1 mm, about 0.38 mm or about 0.63 mm.

The one or more organic T-type photochromic compounds are preferably selected from the group consisting of spiropyrans, spirooxazines, naphthopyrans and combinations thereof, more preferably from the group consisting of spirooxazines, naphthopyrans and combinations thereof. Examples of these organic T-type photochromic compounds are, for example, described in M.A. Chowdhury et al., Journal of Engineered Fibers and Fabrics, 9(1) (2014), pp 107-123, which is incorporated by reference herein in its entirety.

More preferably, the one or more organic T-type photochromic compounds are selected from polydialkylsiloxane-substituted naphthopyrans, still more preferably from polydialkylsiloxane-substituted naphthopyrans capable of taking on a blue colour or a green colour when irradiated with ultraviolet radiation.

Polydiakylsiloxane-substituted naphthopyrans are for example described in US8,865,029B2, *i.e.* the photochromic molecules outlined in Example 3, column 46, line 42 to column 50, line 2, Example 4, column 50, line 4 to column 51 line 4, Example 6, column 62, line 50 to column 53, line 30, Example 7, column 53, line 32 to column 54, line 20, and Example 9, column 57, line 50 to column 63, line 20.

Polydiakylsiloxane-substituted naphthopyrans, sufficiently soluble in e.g. cyclohexanone at room temperature, are for example Reversacol Pennine Green, Reversacol Sea Green and Reversacol Humber Blue (Vivimed Labs Ltd).

In a very preferred embodiment, the thermoplastic polyurethane film in the self-supporting photochromic polymer film comprises at least two organic T-type photochromic compounds.

Preferred organic T-type photochromic compounds are activated upon exposure to radiation having a wavelength of between 360 nm and 450 nm, preferably between 360 and 400 nm, between 370 nm and 390 nm, or between 360 and 380 nm.

The printed polycarbonate surface obtained in step (h), optionally laminated with another layer, may in a subsequent step be transformed into a three-dimensional form, preferably using thermoforming. Non-limiting examples of thermoforming are drape-forming, high-pressure forming and match-metal forming.

In a second aspect, the invention relates to inkjet printed polycarbonate substrates obtained by or obtainable by the process as defined hereinbefore.

In a preferred embodiment, the inkjet printed polycarbonate substrates are inkjet printed electronics.

In a very preferred embodiment, the inkjet printed polycarbonate substrates obtained by or obtainable by the process as defined hereinbefore are chosen from the group consisting of decorated windows and heatable windows, for example for the automotive industry, in-mould electronics, printed antennas, printed RFID-tags, printed capacitive switches, printed capacitive light guides, and printed chip ID cards.

In a very preferred embodiment, the inkjet printed polycarbonate substrates obtained by or obtainable by the process as defined hereinbefore have an adhesion value GT of 0 as determined in accordance with DIN EN ISO 2409-2013.

In an even more preferred embodiment, the inkjet printed polycarbonate substrates obtained by or obtainable by the process as defined hereinbefore have an adhesion value GT of 0 as determined in accordance with DIN EN ISO 2409-2013 after 1 hour in water at 60°C.

Thus, the invention has been described by reference to certain embodiments discussed above. It will be recognized that these embodiments are susceptible to various modifications and alternative forms well known to those of skill in the art.

All embodiments of the invention described hereinbefore can be combined, unless specified otherwise.

Furthermore, for a proper understanding of this document and its claims, it is to be understood that the verb 'to comprise' and its conjugations are used in its non-limiting sense to mean that items following the word are included, but items not specifically mentioned are not excluded.

In addition, reference to an element by the indefinite article 'a' or 'an' does not exclude the possibility that more than one of the element is present, unless the context clearly requires that there be one and only one of the elements. The indefinite article 'a' or 'an' thus usually means 'at least one'.

The invention is further illustrated by the following examples, which should not be interpreted as limiting the present invention in any way.

### EXAMPLES

### Comparative Example 1: inkjet printing on untreated polycarbonate

Inkjet printing tests on a polycarbonate substrate were performed using different black UV-curable inks. The polycarbonate substrate was chosen from Lexan ULG sheets (ULG1000-112, ULG1000 GY and ULG1003 112 from Sabic Innovative Plastics, Bergen op Zoom, the Netherlands Sabic) having thicknesses of between 3 and 6 mm and having A4 size (DIN).

The black UV-curable inks applied were Signtrade amethyst A50-UV-MPX, Swissqprint T-ink and Hapa Aposta UV DOD ink.

Signtrade amethyst A50-UV-MPX ink has been developed to provide high adhesion to a variety of rigid and flexible media and is described to be printable with a variety of printheads (Toshiba, Konica Minolta, Spectra and Ricoh) and with a variety of printers (Grapo, Cube, Durst, Jetrix, Rastek, Agfa, Jeti, Flora). Swissqprint T-ink is offered for printing on glass, metal and for thermoforming applications. Hapa Aposta UV DOD ink can be used with numerous print heads including those supplied by Konica Minolta, Xaar, and Kyocera.

The resulting prints were subjected to adhesion tests in accordance with DIN EN ISO 2409-2013 ('Gitterschnittprüfung'). In this test the adhesion is tested, resulting in a GT value between 0 and 5. The lower the value, the better the adhesion. All tests resulted in prints with a GT-value between 1 and 5 meaning that adhesion was insufficient.

### Example 1: printing on pretreated polycarbonate

In a second experiment, a polycarbonate substrate was pretreated in 3 different ways. The polycarbonate substrate was a Lexan ULG1003 sheet (from Sabic Innovative Plastics, Bergen op Zoom, the Netherlands) having a thickness of 3 mm and having A4 size (DIN).

In a first pretreatment experiment, a first surface of the polycarbonate substrate was subjected to flame oxidation using a Bunsen burner with butane gas. This technique introduces carbon-oxygen bonds at the surface of the polycarbonate sheet that may enhance adhesion of ink to the substrate .

In a second pretreatment experiment, a surface of the polycarbonate substrate was treated with UV-curable Agfa Jeti primer, applied with inkjet and cured with UV-light. The Agfa Jeti primer comprises acrylates and a photoinitiator.

In a third pretreatment experiment, a first surface of the polycarbonate substrate was treated with a treating fluid according to the invention as follows:
a) a treating fluid was prepared by stirring a mixture consisting of 10 wt% cyclohexanone and 90 wt% diacetone alcohol at a temperature of 21 °C for 2 minutes;
b) the treating fluid of step (a) was applied to the first surface of the polycarbonate substrate by spraying in an amount of 100 g/m² at a temperature of 21°C. Thus, 10 g/m² of cyclohexanone was applied to the first surface of the polycarbonate substrate. The cyclohexanone was allowed to impregnate the first surface of the polycarbonate substrate for 3 minutes;
c) directly following step (b), the treated surface was rinsed 4 times with diacetone alcohol to remove an excess of cyclohexanone;
d) the polycarbonate substrate with the rinsed surface obtained in step (c) was placed in a hot air circulating oven at a temperature of 50°C for 20 minutes to lower the treating fluid content to 0.25 wt%, based on the weight of the treated polycarbonate substrate.

This pretreatment resulted in a polycarbonate substrate without visual patterns, orange peel, haze and whitening on the first surface.

The pretreated polycarbonate substrates were subsequently printed on with different black Agfa Jeti Anuvia HDC UV-curable inks (Agfa Anuvia 250 Black ink is the UV-led version) with an Agfa Anapurna M2540iFB printer (KKKK configuration, equipped with either UV-leds or a UV H-bulb). Agfa Anuvia 250 Black ink had a viscosity of between about 24 and 25 mPa·s at a temperature of 23°C and a viscosity of between about 10 and 11 mPa·s at a temperature of 45°C, at shear rates between 20 and 700 1/s, as measured with a MCR301 rheometer from Anton Paar (SN80108634) with a cylindrical geometry (SN27423-43305). Agfa Anuvia 250 Black ink had a dynamic surface tension at a temperature of 23°C of about 34 mN/m at a surface age of 10 ms ranging to a (static) surface tension of about 24 mN/m at a surface age of 10 s, and a dynamic surface tension at a temperature of 45°C of about 30 mN/m at a surface age of 10 ms ranging to a (static) surface tension of 24 mN/m at a surface age of 10 s, as measured using a Krüss BP100 bubble pressure tensiometer (SN30001145). Agfa Jeti Anuvia HDC and Agfa Anuvia 250 Black ink comprise a photoinitiator, acrylates, among which is a crosslinker, and vinyl ether acrylate. See Table 1 for adhesion results.

**Table 1**

| **Test No.** | **Ink** | **Pretreatment** | **Adhesion according to DIN EN ISO 2409-2013 after 1 hour in water at 60°C** |
|---|---|---|---|
| 1 | Agfa Jeti Anuvia HDC | flame treatment | 5 |
| 2 | Agfa Anuvia 250 Black ink | flame treatment | 5 |
| 3 | Agfa Jeti Anuvia HDC | Agfa Jeti primer | 5 |
| 4 | Agfa Anuvia 250 Black ink | Agfa Jeti primer | Not tested |
| 5 | Agfa Jeti Anuvia HDC | treating fluid | 0 |
| 6 | Agfa Anuvia 250 Black ink | treating fluid | 0 |

As is evident from Table 1, only the prints made on the polycarbonate substrate pretreated with a treating fluid according to the invention show good adhesion. Without wishing to be bound by any theory, it is believed that flame oxidation (Tests No 1 and 2) only results in additional Van der Waals bonds between ink and substrate. These Van der Waals bonds are lost if the print is submerged in water. Although initial adhesion of Test No 3 resulted in good adhesion, the adhesion completely disappeared after soaking the print in water of 60°C for 1 hour.

### Example 2: printing on pretreated polycarbonate

In a further experiment, a polycarbonate substrate was again pretreated in 3 different ways. The polycarbonate substrate was a Lexan ULG1003 sheet (from Sabic Innovative Plastics, Bergen op Zoom, the Netherlands) having a thickness of 3 mm and having A4 size (DIN).

In a first pretreatment experiment, a first surface of the polycarbonate substrate was subjected to flame oxidation using a Bunsen burner with butane gas. This technique introduces carbon-oxygen bonds at the surface of the polycarbonate sheet that may enhance adhesion of inks to the substrate.

In a second pretreatment experiment, a first surface of the polycarbonate substrate was treated with a treating fluid according to the invention as follows:
a) a treating fluid consisting of 100 wt% cyclohexanone was provided;
b) the treating fluid of step (a) was applied to a first surface of the polycarbonate substrate by spraying in an amount of 70 g/m² at a temperature of 21°C. Thus, 70 g/m² of cyclohexanone was applied to the first surface of the polycarbonate substrate. The cyclohexanone was allowed to impregnate the first surface of the polycarbonate substrate for 3 minutes;
c) directly following step (b), the treated surface was rinsed 4 times with diacetone alcohol to remove an excess of cyclohexanone;
d) the polycarbonate substrate with the rinsed surface obtained in step (c) was placed in a hot air circulating oven at a temperature of 50°C for 30 minutes to lower the treating fluid content to 0.32 wt%, based on the weight of the treated polycarbonate substrate.

This pretreatment resulted in a polycarbonate substrate without visual patterns, orange peel, haze and whitening on the first surface.

The pretreated polycarbonate substrate was subsequently printed on with Mimaki LH 100 black UV-curable ink with an Mimaki Jfx500-2131 printer (KKKK configuration, equipped with UV-leds). The printed ink was cured with UV-radiation. Mimaki LH 100 black ink comprises acryl acid ester, 1,6-hexanediol diacrylate and photoinitiator. See Table 2 for adhesion results.

Mimaki LH 100 black ink showed Newtonian behavior, had a viscosity of between 23 and 24 mPa·s at a temperature of 23°C and a viscosity of about 10 mPa·s at a temperature of 45°C, at shear rates between 20 and 700 1/s, as measured with a MCR301 rheometer from Anton Paar (SN80108634) with a cylindrical geometry (SN27423-43305). Mimaki LH 100 black ink had a dynamic surface tension at a temperature of 23°C of about 43 mN/m at a surface age of 10 ms ranging to a (static) surface tension of about 38 mN/m at a surface age of 10 s, and a dynamic surface tension at a temperature of 45°C of about 40 mN/m at a surface age of 10 ms ranging to a (static) surface tension of 36.5 mN/m at a surface age of 10 s, as measured using a Krüss BP100 bubble pressure tensiometer (SN30001145).

**Table 2**

| **Test No.** | **Ink** | **Pretreatment** | **Adhesion according to DIN EN ISO 2409-2013 after 1 hour in water at 60°C** |
|---|---|---|---|
| 7 | Mimaki LH 100 | flame treatment | 5 |
| 8 | Mimaki LH 100 | treating fluid | 0 |

As is evident from Table 1, only the prints made on polycarbonate substrate pretreated with a treating fluid according to the invention have good adhesion.

A microscopic analysis of the interface between the polycarbonate substrate and the cured Mimaki LH 100 ink showed an intermediate layer (a layer with a somewhat more grainy texture) wherein polycarbonate substrate and ink are interlocked (see Figure 1). 'A' refers to 'cured UV-curable ink, 'B' to 'intermediate layer' and 'C' to 'polycarbonate layer'.

### Comparative Example 2

In a further comparative example a polycarbonate substrate (Lexan ULG1003 sheet from Sabic Innovative Plastics, Bergen op Zoom, the Netherlands, having a thickness of 3 mm and having A4 size (DIN)) was pretreated as in Example 2. Drying step (d) was however performed until the content of the treating fluid reached about 0 wt%, based on the weight of the treated polycarbonate substrate. It was observed that the treated polycarbonate surface returned to the '*closed*' non-swollen state when all of said treating fluid was removed from the treated polycarbonate substrate. Subsequent inkjet printing in accordance with Example 2 on the treated polycarbonate surface resulted in very poor adhesion according to DIN EN ISO 2409-2013 after 1 hour in water at 60°C (GT value of 5).

### Comparative Example 3

In a still further comparative example a polycarbonate substrate (Lexan ULG1003 sheet from Sabic Innovative Plastics, Bergen op Zoom, the Netherlands, having a thickness of 3 mm and having A4 size (DIN)) was pretreated as in Example 2. No drying step (d) was however performed such that the content of the treating fluid before printing was about 1.9 wt%, based on the weight of the treated polycarbonate substrate. Subsequent inkjet printing in accordance with Example 2 on the treated polycarbonate surface resulted in very poor adhesion according to DIN EN ISO 2409-2013 after 1 hour in water at 60°C (GT value of 5).

### Example 3: printing of conductive patterns on pretreated polycarbonate

In a fourth experiment, a polycarbonate substrate was pretreated in 4 different ways. Polycarbonate without pretreatment was used as a reference. The polycarbonate substrate was a Lexan ULG1003 sheet (from Sabic Innovative Plastics, Bergen op Zoom, the Netherlands) having a thickness of 3 mm and having A4 size (DIN).

In a first pretreatment experiment, a first surface of the polycarbonate substrate was subjected to plasma treatment using. This technique may enhance adhesion of inks to the substrate.

In a second pretreatment experiment, a first surface of the polycarbonate substrate was subjected to UV-radiation using radiation from a UV H-bulb for 70 seconds. This technique may enhance adhesion of inks to the substrate.

In a third pretreatment experiment, a first surface of the polycarbonate substrate was treated with a treating fluid according to the invention as follows:
a) a treating fluid consisting of 100 wt% cyclohexanone was provided;
b) the treating fluid of step (a) was applied to the first surface of the polycarbonate substrate by spraying in an amount of 50 g/m² at a temperature of 21°C. Thus, 50 g/m² of cyclohexanone was applied to the first surface of the polycarbonate substrate. The cyclohexanone was allowed to impregnate the first surface of the polycarbonate substrate for 3 minutes;
c) directly following step (b), the treated surface was rinsed 4 times with diacetone alcohol to remove an excess of cyclohexanone;
d) the polycarbonate substrate with the rinsed surface obtained in step (c) was dried under ambient conditions for a period of 12 hours to remove substantially all the diacetone alcohol and to lower the cyclohexanone content to 0.36 wt%, based on the weight of the treated polycarbonate substrate.

This pretreatment resulted in a polycarbonate substrate without visual patterns, orange peel, haze and whitening on the first surface.

In a fourth pretreatment experiment, a first surface of the polycarbonate substrate was subjected to the plasma treatment of the first experiment and subsequently to the treating fluid of the third pretreatment experiment.

The pretreated polycarbonate substrates were subsequently printed on with different radiation-curable conductive inks; Dupont PE410 and Agfa SI J20X.

Dupont PE410 is an ink-jet silver conductor ink having a viscosity of 12-18 mPa·s at 25°C and a shear rate of 1000 1/s, measured with Bohlin, cone and plate 1°, 40 mm, and a static surface tension of 20-40 mN/m at 25°C. After printing the ink onto the (pretreated) polycarbonate substrates with a Pixdro LP50 printer from Meyer Burger with Konica Minolta printheads, a post-treatment with infrared radiation (to a temperature of 120°C) for a period of 60 minutes was performed to dry the ink an sinter the silver particles.

Agfa Orgacon SI-J20X is an ink-jet nanoparticle silver conductor ink having a viscosity of 12-18 mPa·s at 25°C and a shear rate of 1000 1/s and a static surface tension of 39-42 mN/m ate 25°C. After printing the ink onto the pretreated polycarbonate substrates with a Pixdro LP50 printer from Meyer Burger with Kinica Minolta printheads, a post-treatment with infrared radiation (to a temperature of 120°C) for a period of .. minutes was performed to dry the ink an sinter the silver nanoparticles. Results are given in Table 3.

**Table 3**

| **Test No.** | **Ink** | **Pretreatment** | **Result** |
|---|---|---|---|
| 9 | Agfa Orgacon SI-J20X | no pretreatment | Cracks after drying/sintering |
| 10 | Agfa Orgacon SI-J20X | plasma | Cracks after drying/sintering |
| 11 | Agfa Orgacon SI-J20X | UV | Cracks after drying/sintering |
| 12 | Agfa Orgacon SI-J20X | treating fluid | No cracks |
| 13 | Agfa Orgacon SI-J20X | treating fluid +plasma | No cracks |
| 14 | Dupont PE410 | no pretreatment | Cracks after drying/sintering |
| 15 | Dupont PE410 | plasma | Cracks after drying/sintering |
| 16 | Dupont PE410 | UV | Cracks after drying/sintering |
| 17 | Dupont PE410 | treating fluid | No cracks |
| 18 | Dupont PE410 | treating fluid +plasma | No cracks |

The samples pretreated with both plasma and the treating fluid according to the invention provided the best adhesion and electrical conductivity of the printed layers (the least cracks in the dried/sintered layer). Drying and sintering of polycarbonate prints without pretreatment or pretreated without the treating fluid according to the invention showed a substantial number of cracks leading to a substantial decrease in electrical conductivity. The electrical conductivity of the printed polycarbonate pretreated with treating fluid was tenfold higher than the electrical conductivity of the printed polycarbonate that was not pretreated at all. See Figure 2 for the difference in visual appearance between printed polycarbonate pretreated with treating fluid (right-hand side of dotted line) and printed polycarbonate that was not pretreated at all (left-hand side of dotted line) on a single sheet of polycarbonate.

## Claims

1. Method for printing radiation-curable ink onto a polycarbonate substrate, said method comprising the steps of:
a) providing a polycarbonate substrate in the form of a sheet or film having a thickness and having a first and a second surface;
b) providing a treating fluid being a homogeneous liquid at a temperature between 15 and 35°C, comprising at least 10 wt% of one or more cyclic ketones being liquid at a temperature between 15 and 35°C, based on the weight of the homogeneous liquid phase, wherein the remainder of the treating fluid consists of diacetone alcohol;
c) treating at least part of the at least first surface of the polycarbonate substrate of step (a) with the treating fluid of step (b) for a period of at least 5 seconds at a temperature between 15 and 35°C, resulting in a treated polycarbonate substrate layer with swollen areas where the at least part of the at least first surface is treated with the treating fluid, wherein the one or more cyclic ketones being liquid at a temperature between 15 and 35°C are distributed across at least part of the thickness of the polycarbonate substrate;
d) optionally rinsing the at least first surface of the treated polycarbonate substrate layer obtained in step (c) with diacetone alcohol to remove an excess of the one or more cyclic ketones being liquid at a temperature between 15 and 35°C;
e) optionally drying the treated polycarbonate substrate layer obtained in step (c) or (d) to reduce the weight percentage of treating fluid in and/or on the treated polycarbonate substrate to between 0.05 and 1 wt%, based on the weight of the treated polycarbonate substrate;
f) providing a treated polycarbonate substrate obtained in any one of steps (c) to (e) wherein the amount of the treating fluid on and/or in the treated polycarbonate substrate is between 0.05 and 1 wt%, based on the weight of the treated polycarbonate substrate;
g) applying radiation-curable ink onto at least part of the swollen areas of the at least first surface of the treated polycarbonate substrate provided in step (f) using inkjet printing;
h) curing the ink applied in step (g) such that the ink adheres to the surface of the polycarbonate substrate.

2. Method according to claim 1, wherein the one or more cyclic ketones being liquid at a temperature between 15 and 35°C are selected from the group consisting of unsubstituted cyclic ketones, cyclic ketones substituted with at least one alkyl group and mixtures thereof, more preferably, from the group consisting of cyclopentanone, 3,5,5-trimethyl-2-cyclohexen-1-one, 1-cyclohexylpropan-1-one, 1-cyclohexylethanone, cyclohexanone and mixtures thereof, wherein the cyclic ketone most preferably is cyclohexanone.

3. Method according to claim 1 of 2 wherein in step (c) between 0.06 and 200 g/m², preferably between 0.06 and 150 g/m², more preferably between 0.06 and 100 g/m², still more preferably between 0.06 and 50 g/m², yet more preferably between 0.06 and 20 g/m², based on the treated area, of the treating fluid of step (b) is applied to the at least part of the at least first surface of the polycarbonate substrate of step (a).

4. Method according to any one of claims 1 to 3, wherein the polycarbonate substrate of step (a) has a thickness of between 0.1 and 0.5 mm, and wherein only those parts of the first surface of the polycarbonate substrate of step (a) that are printed on in step (g) are treated with the treating fluid of step (b) in step (c), preferably using inkjet printing, in an amount of between 0.06 and 20 g/m², such as between 0.5 and 20 g/m², between 1 and 20 g/m², between 5 and 20 g/m², between 10 and 20 g/m², between 0.06 and 8 g/m², between 0.06 and 10 g/m² and between 0.06 and 15 g/m², based on the treated area.

5. Method according to any one of claims 1 to 4, wherein step (d) is mandatory and is performed by rinsing the treated polycarbonate substrate obtained in step (c) 1 to 10 times with diacetone alcohol.

6. Method according to any one of claims 1 to 5, wherein step (e) is mandatory, wherein preferably steps (d) and (e) are mandatory, and wherein the drying of the treated polycarbonate substrate in step (e) is performed in a hot air circulating oven, preferably at a temperature of between 35 and 120°C, or wherein the drying of the treated polycarbonate substrate in step (e) is performed by evaporation under ambient conditions for a period of at least 10 hours preferably between 10 and 20 hours.

7. Method according to any one of claims 1 to 6, wherein the amount of the treating fluid on and/or in the treated polycarbonate substrate provided in step (f) is between 0.05 and 0.8 wt%, preferably between 0.1 and 0.7 wt%, more preferably between 0.1 and 0.6 wt%, still more preferably between 0.2 and 0.6 wt%.

8. Method according to any one of claims 1 to 7, wherein the radiation-curable ink applied in step (g) is a radiation-curable solvent-based ink and curing in step (h) encompasses applying infrared radiation at a temperature of between 80 and 130°C for a period of between 10 and 60 minutes, preferably in an oven.

9. Method according to any one of claims 1 to 7, wherein the radiation-curable ink applied in step (g) is a UV-curable ink and curing in step (h) encompasses applying UV-radiation or EB-radiation to the ink layer.

10. Method according to any one of claims 1 to 7, wherein the radiation-curable ink applied in step (g) is an EB-curable ink and curing in step (h) encompasses applying EB-radiation to the ink layer.

11. Method according to any one of claims 1 to 10, wherein the radiation-curable ink comprises metal nanoparticles dispersed therein to provide conductive tracks on the treated polycarbonate substrate.

12. Method according to any one of claims 1 to 10, wherein the radiation-curable ink comprises molecularly dissolved metal-precursor or dispersed metal-precursor nanoparticles to provide conductive tracks on the treated polycarbonate substrate.

13. Method according to claim 11, wherein the metal nanoparticles are sintered in or after step (g).

14. Method according to claim 12, wherein the metal-precursor is converted to the corresponding metal after step (g) followed by sintering the metal.

15. Inkjet printed polycarbonate substrate obtainable by the process according to any one of claims 1 to 14.
